# EUROPÄISCHE PATENTSCHRIFT

(11) **EP 4 008 618 B1**
(45) Veröffentlichungstag und Bekanntmachung des Hinweises auf die Patenterteilung: **20.09.2023**
(21) Anmeldenummer: 21211460.7
(22) Anmeldetag: 30.11.2021
(51) Int. Cl.: B62J 7/04, B62J 7/08, B62J 9/23, B62J 9/24, B62J 9/27

(54) **GEPÄCKTRÄGERSYSTEM ZUR MONTAGE VON ZWEI GEPÄCKSTÜCKEN UND GEPÄCKTRÄGERANORDNUNG**
LUGGAGE HOLDER SYSTEM FOR MOUNTING TWO PIECES OF LUGGAGE AND LUGGAGE HOLDER ASSEMBLY
SYSTÈME DE PORTE-BAGAGES POUR DEUX BAGAGES ET AGENCEMENT DE PORTE-BAGAGES

(30) Priorität: 01.12.2020 DE 102020131795
(43) Veröffentlichungstag der Anmeldung: 08.06.2022
(73) Patentinhaber: Invented Here B.V., 7071 AA Ulft (NL)
(72) Erfinder: RUTJENS, Tessa, 7071 AA Ulft (NL)
(74) Vertreter: V.O.

(56) Entgegenhaltungen:
- CN-U- 210 212 605
- DE-A1- 19 517 847
- DE-U1- 9 213 180
- DE-U1- 9 310 998
- US-A1- 2013 292 438

## Beschreibung

Vorliegende Erfindung betrifft ein Gepäckträgersystem und eine Gepäckträgeranordnung, die die Montage von zwei Gepäckstücken, nämlich einem Hängegepäckstück und einem Aufsatzgepäckstück, an einem Gepäckträger eines Fahrrads erlauben.

Ein Gepäckträgersystem der vorgenannten Art ist durch die gattungsgemäße DE 92 13 180 U1 bekannt. Sie offenbart im Detail eine Halterungsvorrichtung zum Befestigen eines aus zwei formbeständigen Hartschalen bestehenden Behältnisses an einem Fahrrad-Gepäckträger. Bei der Vorrichtung ist eine auf der Gepäckträger-Oberseite vorgesehene, etwa rechteckige Trägerplatte mittels lösbarer Befestigungsmittel mittels zwei auf der Gepäckträger-Unterseite etwa entlang den beiden Trägerplatten-Längsseiten angeordneten Gegenplatten an dem Gepäckträger befestigbar. Die Trägerplatte weist Ausnehmungen auf, hinter welche an bzw. in dem Boden des Behältnisses befestigte Halte- und Sicherungselemente in Form von mindestens einer Halteklaue und einem einrastenden Sicherungs-Schnellverschluß eingreifen. Aus dem Stand der Technik sind Anordnungen bekannt, bei denen ein Gepäckträger an einem Fahrrad befestigt wird. Ein solcher Gepäckträger kann beispielsweise im Bereich des Hinterrads, aber auch im Bereich des Vorderrads oder seitlich davon befestigt sein. Üblicherweise kann auf einem solchen Gepäckträger ein Aufsatzgepäckstück, beispielsweise ein Fahrradkorb, befestigt werden. Zudem ist es möglich, Hängegepäckstücke, beispielsweise Satteltaschen, insbesondere hängend und meist seitlich des Gepäckträgers zu befestigen. Mitunter ist es erforderlich, beide Gepäckstücke gleichzeitig zu befestigen.

Hier setzt die vorliegende Erfindung an, da es auf dem Stand der Technik keine Systeme gibt, die eine einfache Positionierung von zwei Gepäckstücken, nämlich vorgenannten Hängegepäckstücken und Aufsatzgepäckstücken, erlauben. Die Aufgabe ist es, ein System anzubieten, das die gleichzeitige Montage von solchen zwei Gepäckstücken, aber auch die einzelne Montage und Demontage dieser Gepäckstücke auf zuverlässige und einfache Weise erlaubt.

Diese Aufgabe wird durch ein Gepäckträgersystem gemäß dem unabhängigen Anspruch 1 gelöst.

Erfindungsgemäß wird diese Aufgabe gelöst durch ein Gepäckträgersystem, zur Montage von zwei Gepäckstücken, nämlich einem Hängegepäckstück und einem Aufsatzgepäckstück, an einem Gepäckträger eines Fahrrades, umfassend eine Basis-Klemmmittelaufnahme, die am Gepäckträger festlegbar, optional verschraubbar oder dergleichen festlegbar, oder ausgebildet ist; einen Basisträger, mit einem Basis-Klemmmittel, über das der Basisträger an der Basis-Klemmmittelaufnahme am Gepäckträger lösbar fixierbar, optional festklemmbar ist; einen Zwischenträger, über den das Hängegepäckstück am Basisträger festlegbar, optional verschraubbar oder dergleichen festlegbar ist, und der wenigstens eine Aufsatz-Klemmmittelaufnahme aufweist; und einen Aufsatzträger, der am Aufsatzgepäckstück festlegbar, optional verschraubbar oder dergleichen festlegbar ist, und der ein Aufsatz-Klemmmittel aufweist, über das der Aufsatzträger lösbar an der Aufsatz-Klemmmittelaufnahme fixierbar, optional festklemmbar ist, wobei das Aufsatzklemmmittel derart ausgebildet ist, dass es sowohl an der Aufsatzklemmmittelaufnahme am Zwischenträger als auch an der Basis-Klemmmittelaufnahme am Gepäckträger lösbar festklemmbar ist.

Unter festlegbar und optional verschraubbar oder dergleichen festlegbar, wird hier verstanden, dass eine feste und vorzugsweise nur unter größerem Zeitaufwand als die im nachfolgenden beschriebene festklemmbare Verbindung lösbare Verbindung geschaffen wird. Beispielsweise sind hier Schraubverbindungen, Nietverbindungen, Kabelbinder, Drahtklemmen etc. denkbar. Optional ausgenommen sind Verbindungen, die ein einfaches, insbesondere werkzeugloses Lösen der Gegenstände voneinander erlauben.

Unter fixierbar, optional festklemmbar wird jede lösbare Verbindung verstanden, die das einfache, insbesondere werkzeuglose Lösen zwischen Basis-klemmmittel und Basisklemmmittelaufnahme bzw. Aufsatzklemmmittelaufnahme und Aufsatzklemmmittel erlauben. Optional sind hier beispielsweise elastische Klemmvorsprünge, vorgespannte Arretierungssysteme, Rastverbindungen, Schnellverschlüsse, Einklinksysteme, Hakenarretierungen und optional Systeme verstanden, bei denen das Einsetzen ohne Betätigung eines Lösemittels und das Entnehmen mit Betätigung dieses Lösemittels möglich sind. Derartige Systeme sind aus dem Stand der Technik bekannt.

Fixierbar steht also in Kontrast zu festlegbar; es definiert optional eine andere Befestigungsart. Optional sind also unterschiedliche Systeme mit unterschiedlichem Arretierungs- und De-Arretierungsverhalten damit definiert, wobei festklemmbar die schnelle, optional auch zerstörungsfreie Lösbarkeit, und festlegbar die zeitaufwändigere, optional auch zerstörungsbehaftete Lösbarkeit beschreibt.

In Verbindung mit der Basisklemmmittelaufnahme, die "am Gepäckträger anordbar ist", gilt optional, dass diese auch, insbesondere integral am Gepäckträger ausgebildet sein kann. Beispielsweise kann die Basisklemmmittelaufnahme auch als wenigstens ein Holm, ein Bauteil, ein Versteifungselement etc. des Gepäckträgers ausgebildet sein. Das Basisklemmmittel des Basisträgers kann dann korrespondierend dazu als Klemmelement ausgebildet sein, das mit dieser entsprechend ausgebildeten Basisklemmmittelaufnahme in Kopplungseingriff bringbar ist.

Ein Punkt der Erfindung ist, dass das Hängegepäckstück fest am Basisträger und dem Zwischenträger befestigt wird. Er kann optional zusammen mit diesen Trägern vom Gepäckträger entfernt werden. Ein Benutzer muss also einmalig eine Festlegung des Hängegepäckstücks am Zwischenträger und/oder Basisträger vornehmen, wobei dann eine feste Verbindung zwischen diesen Trägern und dem Hängegepäckstück ausgebildet ist.

Optional sind am Träger oder am Hängegepäckstück Haltemittel, und insbesondere wenigstens ein Griff vorgesehen, sodass das Hängegepäckstück zusammen mit den Trägern vom Gepäckträger entfernbar und/oder an diesem befestigbar ist.

Der Zwischenträger enthält dann seinerseits eine Aufsatzklemmmittelaufnahme, über die das Aufsatzgepäckstück mit seinem daran festgelegten Aufsatzträger, an dem ein Aufsatzklemmmittel ausgebildet ist, festklemmbar ist. Auf diese Weise kann das Aufsatzgepäckstück sehr einfach vom Hängegepäckstück bzw. Gepäckträger gelöst werden.

In Kombination ist eine sehr einfache Montage der zwei Gepäckstücke am Gepäckträger möglich.

Zudem ist es denkbar, unterschiedliche Zwischenträger vorzusehen, die sich beispielsweise in der Widerstandsfähigkeit, dem Kraftabtragverhältnis etc. unterscheiden, um so beispielsweise unterschiedliche Hängegepäckstücke bzw. Aufsatzgepäckstücke zu befestigen.

Es ist denkbar, das Hängegepäckstück am Zwischenträger zu befestigen, um die Kombination der beiden dann am Basisträger zu befestigen. Es ist denkbar, das Hängegepäckstück am Basisträger zu befestigen, um dann anschließend den Zwischenträger zu befestigen, und/oder es ist denkbar, das Hängegepäckstück durch die Kombination zwischen Basisträger und Zwischenträger zu befestigen, beispielsweise festzuklemmen. Auf diese Ausführungen wird im Folgenden noch im Detail eingegangen.

Wie oben beschrieben, ist das Aufsatzklemmmittel derart ausgebildet, dass es sowohl an der Aufsatzklemmmittelaufnahme am Zwischenträger als auch an der Basisklemmmittelaufnahme am Gepäckträger lösbar festklemmbar ist. Auf diese Weise kann das Aufsatzgepäckstück mit dem daran festgelegten Aufsatzträger sowohl zusammen mit dem Hängegepäckstück als auch alleine am Gepäckträger befestigt werden. Somit kann das Aufsatzgepäckstück vom Zwischenträger entfernt, der Zwischenträger samt dem Hängegepäckstück vom Gepäckträger entfernt und dann das Aufsatzgepäckstück wieder auf dem Gepäckträger festgeklemmt werden. Natürlich ist es insbesondere in diesem Zusammenhang möglich, ein Hängegepäckstück nachträglich zusätzlich zum Aufsatzgepäckstück am Gepäckträger festzuklemmen.

Optional ist das Aufsatzklemmmittel im Wesentlichen identisch zum Basisklemmmittel ausgebildet, und/oder die Aufsatzklemmmittelaufnahme im Wesentlichen identisch zur Basisklemmmittelaufnahme ausgebildet. Optional bedeutet dies, dass die wenigstens komplementär und miteinander im Klemmeingriff stehenden Elemente der jeweiligen Mittel identisch zueinander ausgebildet sind, sodass die Klemmmittel bzw. Klemmmittelaufnahmen miteinander im Klemmeingriff treten können.

Insbesondere in diesem Zusammenhang ist es denkbar, dass das Mittel bzw. die Mittelaufnahme weitere Elemente umfasst, die nur an einem der jeweiligen Mittel, also der Basismittel bzw. Mittelaufnahmen oder der Aufsatzmittel bzw. Mittelaufnahmen, ausgebildet sind.

Optional ist der Zwischenträger am Basisträger und/oder der Aufsatzträger am Aufsatzgepäckstück derart mit wenigstens einem Befestigungsmittel festlegbar, dass sie nur mit einem Werkzeug lösbar sind, um so wenigstens über einen begrenzten Zeitraum, insbesondere wenigstens drei Minuten, optional wenigstens eine Minute, ein unautorisiertes Lösen des Hängegepäckstücks vom Basisträger bzw. des Aufsatzgepäckstücks vom Aufsatzträger zu verhindern. Wie eingangs erwähnt, können solche Befestigungsmittel Schraubverbindungen, nicht lösbare Klemmverbindungen, Schnurverbindungen etc. sein. Das Befestigungsmittel ist vorzugsweise so ausgeführt, dass es beim Transport des Hängegepäckstücks und/oder des Aufsatzgepäckstücks verlässlich an dem jeweiligen Gepäckstück festgelegt bleibt, beispielsweise wenn das Aufsatzgepäckstück und/oder das Hängegepäckstück vom Fahrradträger entfernt ist. Insbesondere gewinnt eine solche Ausbildung eine Bedeutung mit einer Ausführung, bei der optional der Basisträger und/oder der Aufsatzträger ein Sicherungsmittel aufweisen, über das der Basisträger diebstahlgeschützt lösbar am Gepäckträger bzw. der Aufsatzträger diebstahlgeschützt am Zwischenträger festlegbar sind, und optional nur unter Verwendung eines Schlüssels lösbar sind. Ein Schlüssel kann ein herkömmlicher Steckschlüssel, ein Code-Schloss, ein elektrisches Sicherungsmittel etc. sein. Der Schlüssel erlaubt optional nur einem Berechtigtem das Lösen und/oder Arretieren des Sicherungsmittels. Ein typisches Sicherungsmittel kann beispielsweise ein Schlüsselschloss sein.

Optional ist das Hängegepäckstück ein seitlich am Gepäckträger anzuordnendes Gepäckstück, beispielsweise eine Satteltasche, optional eine Satteltasche mit zwei Taschen, die an gegenüberliegenden Seiten des Fahrrads anzuordnen ist. Solche Satteltaschen können beispielsweise im Bereich des Vorderrads und/oder im Bereich des Hinterrads eines Fahrrads angeordnet sein. Sie sind hinreichend aus dem Stand der Technik bekannt.

Optional ist das Aufsatzgepäckstück ein auf dem Gepäckträger anzuordnendes Gepäckstück, beispielweise ein Korb, ein Hundekorb, ein Topcase, ein Kindersitz. Optional ist der Zwischenträger an die jeweiligen Gepäckstücke und insbesondere das Aufsatzgepäckstück angepasst. So kann beispielsweise ein Zwischenträger, der für einen Kindersitz ausgebildet ist, stabiler ausgebildet sein, als ein Zwischenträger, der für einen Korb ausgebildet ist. Optional ist dabei sichergestellt, dass die jeweiligen Gepäckstücke nur auf dem dazu ausgebildeten Zwischenträger anordbar und insbesondere festklemmbar sind. Selbige Ausführung kann natürlich auch für den Aufsatzträger und/oder den Basisträger gelten, sodass beispielsweise ein Zwischenträger, geeignet für einen Kindersitz, nur auf einem entsprechend ausgebildeten Basisträger anordbar und insbesondere festlegbar ist.

Optional weist der Zwischenträger wenigstens ein Fixierelement, optional ein Presselement und der Basisträger wenigstens ein korrespondierendes Fixiergegenelement, optional ein Pressgegenelement auf, die derart komplementär zueinander ausgebildet sind, dass sie im festgelegten Zustand des Hängegepäckstücks wenigstens ein Montagelement des Hängegepäckstücks, optional eine Brücke einer Satteltasche, die optional zwei Taschen der Satteltasche verbindet, festlegen, optional einklemmen. Auf diese Weise wird eine sichere Fixierung des Hängegepäckstücks am Basisträger und dem Zwischenträger garantiert. Es ist denkbar, die Fixierelemente und die korrespondierenden Fixiergegenelemente derart auszubilden, dass das Hängegepäckstück mehraxial fixiert ist, sodass sowohl eine vertikale Fixierung als auch eine horizontale Fixierung gewährleistet ist.

Horizontal und vertikal bezieht sich hier optional auf die Haupterstreckungsrichtung des Fahrrads und eine Fahrbahn, auf der das Fahrrad bewegt wird, wobei unter horizontal dann optional coplanar zur Fahrbahn verstanden wird.

Optional sind das Fixierelement und das Fixiergegenelement, optional das Presselement und das Pressgegenelement, an sich gegenüberliegenden Seiten des Zwischenträgers und des Basisträgers, optional an einer Unterseite des Zwischenträgers und an einer Oberseite des Basisträgers ausgebildet. Insbesondere in diesem Zusammenhang kann das Fixierelement, optional das Presselement, als ein Vorsprung und/oder als eine Vertiefung aus der Erstreckungsebene des Zwischenträgers hervorragen bzw. in dieser ausgebildet sein, und/oder das Fixiergegenelement, optional das Pressgegenelement als ein dazu komplementärer Vorsprung und/oder als eine dazu komplementäre Vertiefung aus der Erstreckungsebene des Basisträgers hervorragen bzw. in diese ausgebildet sein, und zwar derart, dass ein Fixierbereich, optional ein Klemmbereich für das Hängegepäckstück gebildet wird. In diesem Fixierbereich bzw. Klemmbereich ist das Hängegepäckstück optional festgelegt. Bei korrespondierenden, als Vorsprüngen ausgebildeten Presselementen bzw. Pressgegenelementen erfolgt das Festlegen des Hängegepäckstücks vorzugsweise über eine Pressung durch die Vorsprünge.

Bei als Vorsprung und komplementärer Vertiefung ausgebildeten Presselementen und Pressgegenelementen erfolgt die Festlegung ebenfalls über eine Pressung und insbesondere eine Änderung der Erstreckungsrichtung des Montageelements, das beispielsweise in die Vertiefung hineingedrückt wird. Bei der Ausbildung von zwei korrespondierenden Vertiefungen erfolgt die Fixierung optional über ein Arretierungsmittel, das am Montageelement vorgesehen ist, und dass in die Vertiefungen arretierend optional festlegend einragt, sobald die Vertiefungen in korrespondierender Ausrichtung miteinander gebracht sind.

Optional sind eine Mehrzahl an Fixierelementen, optional Presselementen, und/oder Fixiergegenelementen, optional Pressgegenelementen, vorgesehen, von denen wenigstens zwei unter Bildung eines fixierfreien Bereichs, optional eines klemmfreien Bereichs, voneinander beabstandet sind. Dieser fixierfreie, optional klemmfreie Bereich erlaubt das Anordnen von Hängegepäckstücken, die in diesem Bereich Montageelemente aufweisen, die beispielsweise aus anderen Montageserien für das Hängegepäckstück rühren und insbesondere von Hängegepäckstücken, die beispielsweise von Mitbewerbern auf dem Markt angeboten sind. Insbesondere in diesem Zusammenhang sind also die Fixierelemente und/oder Fixiergegenelemente optional möglichst so ausgebildet, dass sie eine Vielzahl an unterschiedlichen Hängegepäckstücken festlegen können. Optional sind sie möglichst klein und optional kleinflächig ausgebildet, sodass nur kleine Bereiche der Hängegepäckstückmontageelemente, optional eingeklemmt werden. Die Größe der Fixierelemente ist dabei so gewählt, dass eine sichere Festlegung gegen insbesondere Bewegung des Hängegepäckstücks relativ zum Gepäckträger gewährleistet ist.

Fixierelemente und Fixiergegenelemente können u. a. auch als Vorsprünge ausgebildet sein, die Ausnehmungen im Montageelement des Hängegepäckstücks durchgreifen und so eine primär horizontale Fixierung erlauben, während eine vertikale Fixierung durch weitere Elemente, beispielsweise Längs- und/oder Querträger des Basisträgers und/oder Zwischenträgers gewährleistet wird.

Optional ist ein Relativabstand zwischen der Unterseite des Zwischenträgers und der Oberseite des Basisträgers im Bereich zwischen dem Presselement und dem Pressgegenelement geringer als der Abstand zwischen der Unterseite des Zwischenträgers und der Oberseite des Basisträgers im fixierfreien Bereich, optional dem klemmfreien Bereich. Dies gilt insbesondere im Zusammenhang mit der zuvor erwähnten Beabstandung der jeweiligen Fixierelemente und Fixiergegenelemente.

Ganz allgemein gilt, dass optional das Fixierelement als Presselement und das Fixiergegenelement als Pressgegenelement ausgebildet sein kann.

Optional weisen der Basisträger und/oder der Zwischenträger und/oder der Aufsatzträger eine Plattengeometrie mit einer Haupterstreckungsebene E_{B}, Ez, E_{A} auf, wobei optional wenigstens zwei der Haupterstreckungsebenen im festgelegten bzw. festgeklemmten Zustand coplanar zueinander ausgerichtet sind. Geringfügige Abweichungen der Coplanarität sind denkbar. Diese Abweichungen können optional +/- 5 Grad, weiter optional +/- 2 Grad betragen.

Optional ist die Coplanarität bzw. die Ausbildung der Haupterstreckungsebenen als durchschnittlicher Wert zu sehen, wobei Vorsprünge und Vertiefungen außer Acht gelassen werden.

Optional sind der Basisträger auf dem Zwischenträger und/oder der Zwischenträger auf dem Aufsatzträger stapelbar ausgebildet. Optional bilden die jeweiligen Träger im festgeklemmten bzw. festgelegten Zustand eine Sandwich-Anordnung und insbesondere eine Anordnung, bei der beispielsweise das Hängegepäckstück zwischen zwei Trägern fixiert, optional festgeklemmt ist.

Optional weist der Zwischenträger eine Rahmengeometrie aus einer Mehrzahl an Rahmenträgern auf, die im Wesentlichen biegesteif miteinander verbunden sind. Eine solche Rahmengeometrie kann in Form einer Platte mit einer Haupterstreckungsebene ausgebildet sein. Grundsätzlich ist die Haupterstreckungsebene im festgeklemmten bzw. festgelegten Zustand vorzugsweise horizontal und insbesondere horizontal zur Fahrbahn, auf der das Fahrrad bewegt wird, ausgebildet.

Optional ist wenigstens ein Teil der Rahmenträger als Querträger und Längsträger ausgebildet. Diese Querträger und Längsträger sind optional biegesteif miteinander verbunden. Optional sind die Längsträger koaxial zur Haupterstreckungsachse des Gepäckträgers und/oder des Fahrrads und insbesondere zu einer Bewegungsrichtung des Fahrrads ausgebildet. Optional ist wenigstens ein Querträger im Querschnitt dicker ausgebildet als wenigstens ein Längsträger. Optional sind die Querträger Hauptlastträger, wobei sie die vom festgeklemmten Gepäckstück eingeleiteten Lasten in den Gepäckträger primär ableiten. Optional sind die Klemmmittel bzw. Klemmgegenmittel am Querträger angeordnet oder stehen mit diesem in Kraftkopplung.

Optional ist der Längsträger in Bezug auf eine Oberseite des Querträgers, optional in Bezug auf eine durch Oberseiten von wenigstens zwei Querträgern gebildete Oberseitenebene, und/oder in Bezug auf eine Unterseite des Querträgers, optional in Bezug auf eine durch Unterseiten von wenigstens zwei Querträgern gebildete Unterseitenebene, zurückgesetzt angeordnet. Insbesondere in diesem Zusammenhang lässt sich der zuvor beschriebene fixierfreie, optional klemmfreie Bereich bilden. Insbesondere ist optional eine Punktlagerung derart ausgebildet, dass der Zwischenträger auf den Basisträger punktgelagert ist und/oder der Aufsatzträger auf dem Zwischenträger punktgelagert ist bzw. sind drei oder mehr Punkte als Lagerpunkte vorgesehen.

Optional sind die Rahmenträger des Zwischenträgers derart miteinander verbunden, dass sie eine insbesondere mittlere Zugangsdurchführung einschließen. Über eine solche Zugangsdurchführung ist beispielsweise ein Zugriff auf ein Trägerelement des Hängegepäckstücks oder an weitere am Gepäckträger und/oder Hängegepäckstück vorgesehene Zusatzelemente, beispielsweise eine Batterie, eine Gepäckträgerklammer, eine Beleuchtungseinrichtung bzw. Teile davon, möglich. Auch kann im Bereich dieser Zugangsdurchführung oder durch diese erreichbar ein Lagerelement, beispielsweise ein Fach oder eine Box, angeordnet sein.

Eine solche Box bzw. ein solches Fach kann optional fest am Basisträger und/oder fest am Zwischenträger befestigbar oder befestigt sein.

Optional weist der Basisträger wenigstens ein Positionierelement und der Zwischenträger wenigstens ein Positioniergegenelement auf, die in einer relativ zueinander ausgerichteten Sollposition Ps zwischen Basisträger und Zwischenträger miteinander in Entkopplungseingriff stehen, und/oder weist der Zwischenträger ein Positionierelement und der Aufsatzträger ein Positioniergegenelement auf, die in einer relativ zueinander ausgerichteten Sollposition Ps zwischen Zwischenträger und Aufsatzträger miteinander in Kopplungseingriff stehen. Eine solche Ausführung erlaubt das einfache Ausrichten der jeweiligen Träger zueinander. Insbesondere ist so eine Temporärfixierung möglich, um das Anbringen der eingangs beschriebenen Mittel zur Festlegung, also beispielweise Schrauben, Bolzen, Schnüre etc., zu erlauben.

Das Positioniermittel kann optional als horizontal wirkendes Positioniermittel und/oder als vertikal wirkendes Positioniermittel dienen. Bei einer vertikal wirkenden Positionierung ist so beispielsweise ein Abstand zwischen den jeweiligen Trägern im festgeklemmten bzw. festgelegten Zustand einstellbar.

Optional sind der Basisträger und/oder der Zwischenträger und/oder der Aufsatzträger aus einem Spritzgussmaterial, optional aus einem faserverstärkten Kunststoff, weiter optional aus Polyamid 6 mit 30 % Glasfaser (PA 6 EF30) und weiter optional aus demselben Material hergestellt. Hier sind wenigstens zwei Träger aus optional demselben Material hergestellt.

Gemäß dem abhängigen Anspruch 15 betrifft die vorliegende Erfindung nicht nur ein Gepäckträgersystem, sondern auch eine Gepäckträgeranordnung, umfassend ein solches Gepäckträgersystem und einen Gepäckträger, optional weiter umfassend zwei Gepäckstücke, nämlich ein Hängegepäckstück und ein Aufsatzgepäckstück. Es ist auch denkbar, dass eine solche Gepäckträgeranordnung ein Fahrrad umfasst.

Optional ist es denkbar, dass das Hängegepäckstück im festgeklemmten bzw. festgelegten Zustand im Wesentlichen unterhalb des Aufsatzgepäckstücks bzw. ein Teilbereich unterhalb des Aufsatzgepäckstücks angeordnet ist. Es ist aber auch denkbar, das Hängegepäckstück in derselben horizontalen Ebene wie das Aufsatzgepäckstück und/oder oberhalb dieser Ebene anzuordnen.

Weitere Ausführungen des erfindungsgemäßen Gepäckträgersystems ergeben sich aus den abhängigen Ansprüchen 2-14.

Im Folgenden wird die Erfindung anhand von Ausführungsbeispielen beschrieben, die in den beiliegenden Zeichnungen näher erläutert werden. Dabei zeigen:
Figur 1 eine Explosionsdarstellung der Gepäckträgeranordnung und des Gepäckträgersystems gemäß einer Ausführungsform der Erfindung;
Figur 2 eine Darstellung der Ausführungsform gemäß Figur 1 in festgelegtem Zustand;
Figur 3 eine Teildarstellung der Ausführungsform gemäß Figur 2;
Figur 4 eine Ausführungsform gemäß Figur 3 in festgelegtem und festgeklemmtem Zustand ohne Gepäckstücke;
Figuren 5 bis 9 unterschiedliche Detailansichten einer Ausführungsform eines Zwischenträgers;
Figuren 10 und 11 Detaildarstellungen von Positionier- und Positioniergegenelementen einer Ausführungsform des Zwischenträgers;
Figur 12 eine isometrische Darstellung des Zwischenträgers mit festgelegtem Hängegepäckstück.

Im Folgenden werden für gleiche und gleich wirkende Bauteile dieselben Bezugszeichen verwendet, wobei bisweilen Hochindizes ihre Anwendung finden.

Grundsätzlich sind die Begriffe, die in der Figurenbeschreibung verwendet werden, im Sinne des obigen Teils auszulegen. Dies betrifft insbesondere die Begriffe "festklemmbar", "verschraubbar", "festlegbar" und "ausgebildet". Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

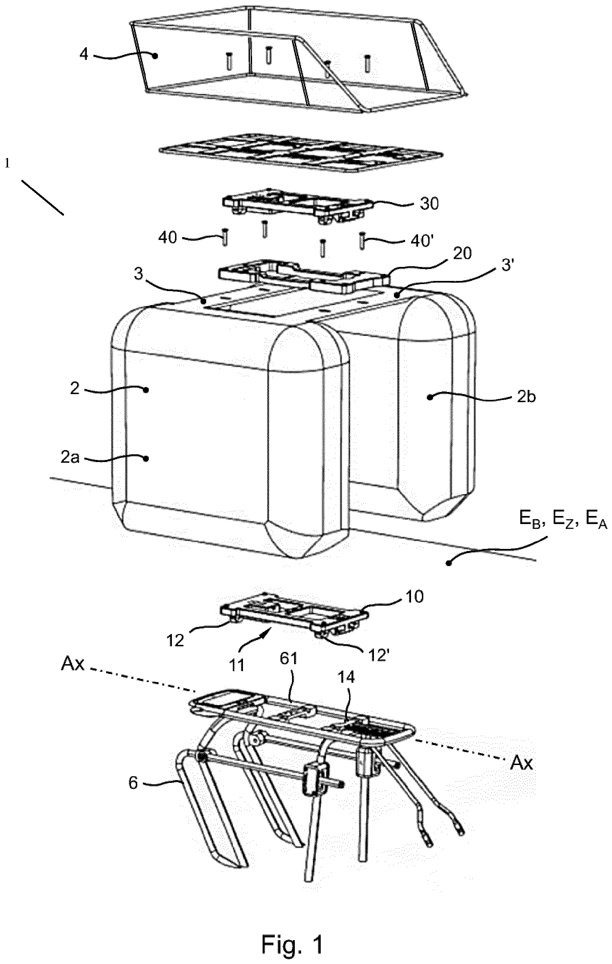

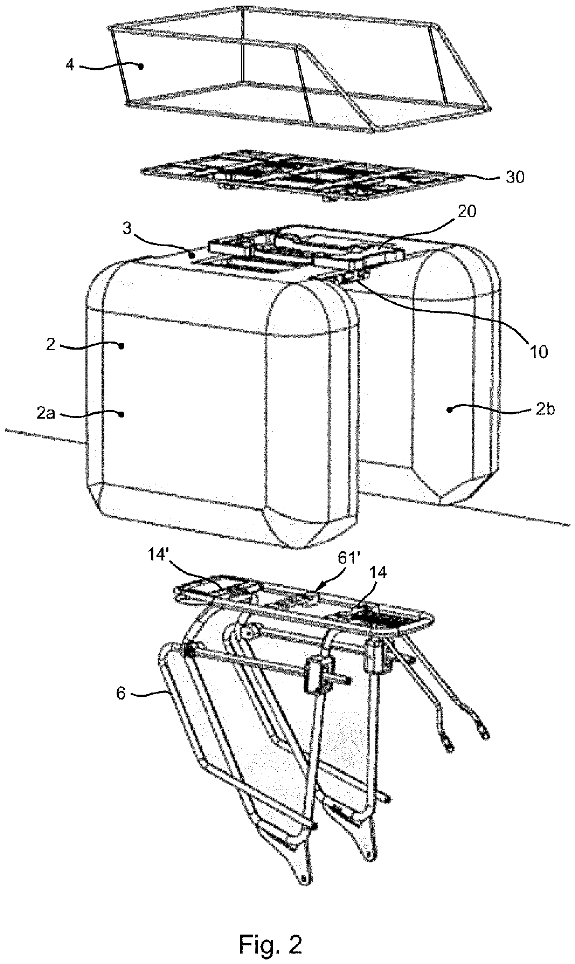

Die Figuren 1 und 2 zeigen Explosionsdarstellungen einer Ausführungsform der erfindungsgemäßen Gepäckträgeranordnung und des erfindungsgemäßen Gepäckträgersystems in unterschiedlichen Montagezuständen. Dargestellt ist ein Gepäckträger 6, auf dem ein Hängegepäckstück 2 und ein Aufsatzgepäckstück 4 montiert werden können. Axzeigt dabei die Längsstreckungsachse des Gepäckträgers bzw. Haupterstreckungsachse eines Fahrrads.

Zur Befestigung der Gepäckstücke ist ein Gepäckträgersystem 1 vorgesehen, im Wesentlichen umfassend einen Basisträger 10, einen Zwischenträger 20 und einen Aufsatzträger 30.

Erfindungsgemäß weist der Basisträger 10 ein Basisklemmmittel 12 auf, über das er an einer Basisklemmmittelaufnahme 14 am Gepäckträger 6 festklemmbar ist.

Optional sind die Basisklemmmittel 12 an einer Unterseite 11 des Basisträgers 10 angeordnet. Die Basisklemmmittelaufnahme 14 ist optional an einer Oberseite 61 des Gepäckträgers 6 angeordnet.

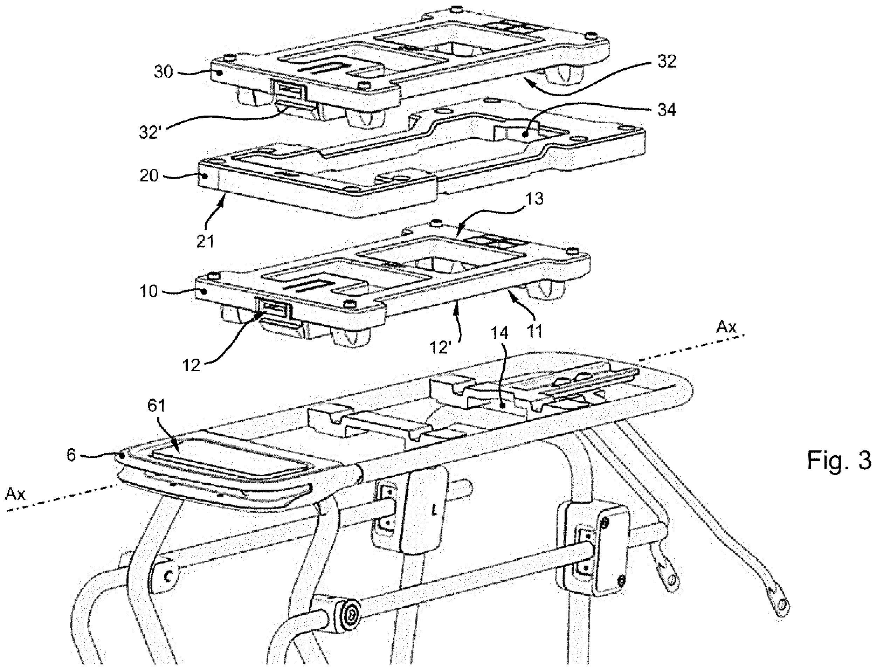

Um das hier dargestellte Hängegepäckstück 2, optional ausgebildet als eine Satteltasche mit zwei Taschen 2a, 2b, die über ein Montageelement und hier optional über eine Brücke 3 miteinander verbunden sind, auf dem Gepäckträger zu befestigen, ist erfindungsgemäß der Zwischenträger 20 vorgesehen, über den das Hängegepäckstück 2 am Basisträger 10 befestigbar ist. Dabei ist das Hängegepäckstück am Basisträger verschraubbar oder dergleichen festlegbar ausgebildet. Dieser festgelegte Zustand ist u. a. in Figur 2 dargestellt. Das Hängegepäckstück 2 ist hier zwischen einer Unterseite 21 (siehe Figur 3) des Zwischenträgers 20 und einer Oberseite 13 des Basisträgers angeordnet, optional eingeklemmt. Dazu ist optional wenigstens ein Befestigungsmittel 40, hier eine Mehrzahl an Schrauben, vorgesehen (siehe Fig. 1), über das der Zwischenträger 20 am Basisträger 10 verschraubbar oder dergleichen festlegbar ist. Hier können jede Art von Befestigungsmittel 40 verwendet werden, die ein Festlegen im Sinne der vorliegenden Erfindung ermöglichen. Die Kombination aus Zwischenträger 20, Hängegepäckstück 2 und Basisträger 10 kann einfach über das Basisklemmmittel 12 auf dem Gepäckträger 6 befestigt werden. Durch die entsprechende Ausbildung der Basisklemmmittel und Basisklemmmittelaufnahmen kann diese Kombination sowohl einfach festgeklemmt als auch vom Gepäckträger 6 gelöst werden.

Um ein weiteres, hier als Korb 4 dargestelltes Gepäckstück und insbesondere Aufsatzgepäckstück 4 auf dem Gepäckträger 6 zu befestigen, weist erfindungsgemäß der Zwischenträger 20 an seiner Oberseite 23 eine Basisklemmmittelaufnahme/Aufsatzklemmmittelaufnahme 34 auf, über die der Aufsatzträger 30 mit korrespondierend ausgebildeten Aufsatzklemmmitteln 32 festklemmbar ist. Der Aufsatzträger 30 ist seinerseits am Aufsatzgepäckstück 4 verschraubbar oder dergleichen festlegbar ausgebildet. Auch hier gelten die hier zum Begriff festlegbar getroffenen Definitionen. Durch die feste Verbindung zwischen Aufsatzträger 30 und Aufsatzgepäckstück 4 kann die Kombination der beiden über das an der Kombination der beiden vorgesehene Aufsatzklemmmittel mit der Aufsatzklemmmittelaufnahme 34 am Zwischenträger 20 kraftgekoppelt und so das Aufsatzgepäckstück 4 sicher, aber lösbar am Gepäckträger 6 unter optionaler Zwischenanordnung des Hängegepäckstücks 2 befestigt werden.

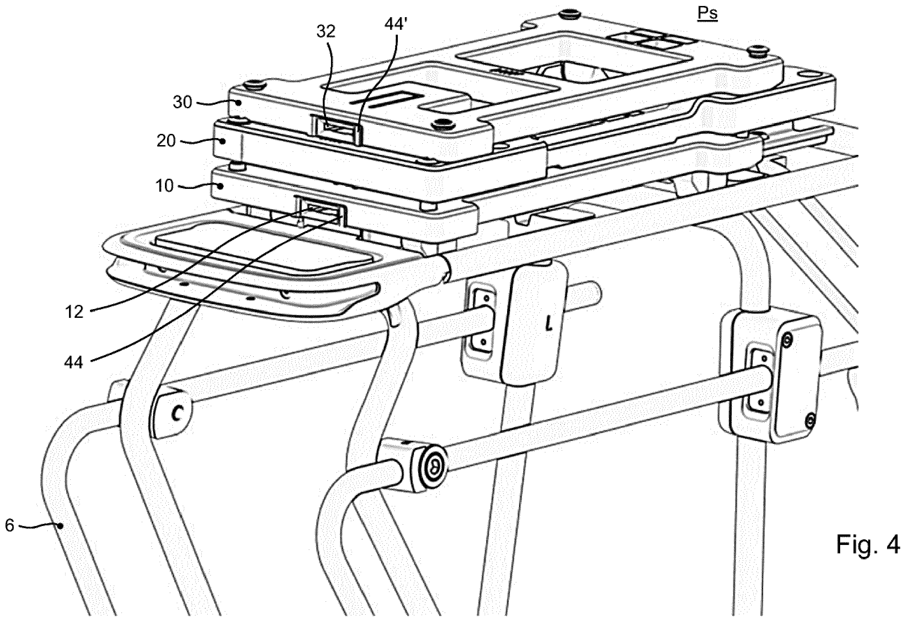

Wie insbesondere in Figur 3 und 4 dargestellt ist das Aufsatzklemmmittel 32 derart ausgebildet, dass es sowohl an der Aufsatzklemmmittelaufnahme 34 am Zwischenträger 20 als auch an der Basisklemmmittelaufnahme 14 am Gepäckträger 6 lösbar festklemmbar ist. Auf diese Weise kann das Aufsatzgepäckstück 4 sowohl auf dem Zwischenträger 20 als auch auf dem Gepäckträger 6 direkt festgeklemmt werden. Ganz grundsätzlich ist es natürlich auch möglich, mehrere Zwischenträger 20 auszubilden, über die eine Mehrzahl an weiteren Gepäckstücken am Gepäckträger 6 befestigbar ist. Unter Gepäckstück kann insbesondere in diesem Zusammenhang nicht nur ein Korb oder eine Tasche etc. verstanden werden, sondern auch Zusatzbauteile, wie Kupplungen, Beleuchtungen, Zusatzmodule, Batteriehalterungen etc.

Ebenfalls in Figur 3 dargestellt ist, dass das Aufsatzklemmmittel 32 optional im Wesentlichen identisch zum Basisklemmmittel 12 ausgebildet und/oder die Aufsatzklemmmittelaufahme 34 im Wesentlichen identisch zur Basisklemmmittelaufnahme 14 ausgebildet ist. Insbesondere in diesem Zusammenhang ist es möglich, Klemmmittel bzw. Klemmmittelaufnahmen so auszubilden, dass nur bestimmte Träger auf korrespondierenden Trägern befestigbar sind. Auf diese Weise kann beispielsweise sichergestellt werden, dass ein Kindersitz kombiniert mit dem Aufsatzträger 30 nur auf einem für die Lastabtragung eines Kindersitzes ausgebildeten Zwischenträger 20 und einem entsprechend ausgebildeten Basisträger 10 aufgesetzt werden kann. Über die in Figur 4 dargestellten Sicherungsmittel ist optional der Basisträger und/oder Aufsatzträger befestigt, wobei diese Befestigung insbesondere die Verklemmung vorteilhafterweise werkzeuglos lösbar ausgebildet ist. Ein solches Sicherungsmittel 44 kann optional auch mit einem Diebstahlschutz versehen sein, sodass es optional nur unter Verwendung eines Schlüssels lösbar ist. Auf diese Weise kann der Diebstahl am Gepäckträger 6 befestigter Gepäckstücke verhindert werden.

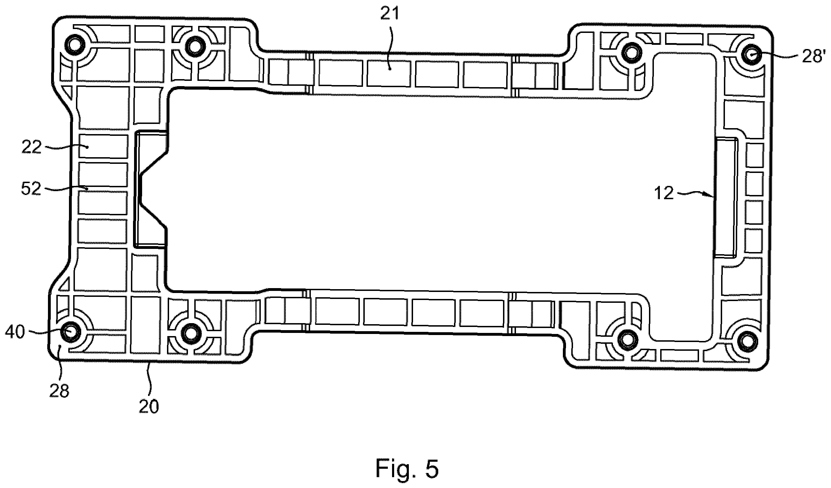

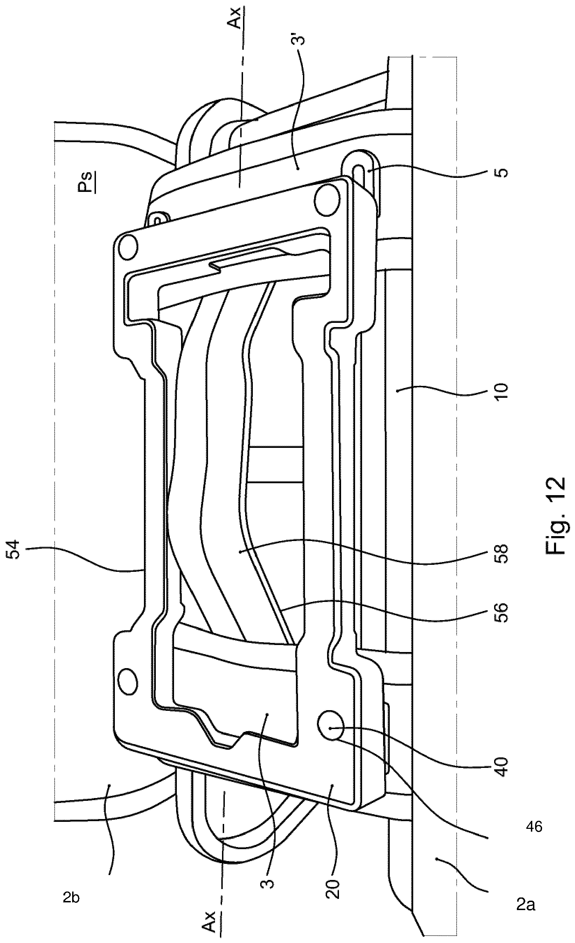

Wie insbesondere in den Figuren 5 bis 11 dargestellt, weisen der Zwischenträger 20 wenigstens ein Fixierelement, optional ein Presselement 22, und der Basisträger 10 wenigstens ein korrespondierendes Fixiergegenelement, optional ein Pressgegenelement 24, auf. Diese Elemente 22 und Gegenelemente 24 sind derart komplementär zueinander ausgebildet, dass sie im festgelegten Zustand des Hängegepäckstücks 2, siehe beispielweise Figur 12, wenigstens ein Montageelement 3 des Hängegepäckstücks 2 festlegen, optional einklemmen. Bei der hier dargestellten Ausführungsform können zudem am Basisträger wenigstens ein Positionierelement 26 und am Zwischenträger wenigstens ein Positioniergegenelement 28 vorgesehen sein, die in einer relativ zueinander ausgerichteten Sollposition Ps, siehe beispielweise in Figur 4 bzw. Figur 12, zwischen Basisträger 10 und Zwischenträger 20 miteinander in Kopplungseingriff stehen. Dies erleichtert die Ausrichtung der Träger relativ zueinander. Zudem ist es denkbar, Positionierelement 26 und Positioniergegenelement 28 als Fixierelemente auszubilden, die der Festlegung des Hängegepäckstücks dienen. Bei dieser Ausführungsform, siehe insbesondere Figur 12, erlauben beispielsweise die Positionierelemente 26 und Positioniergegenelemente 28 eine Horizontalfixierung, indem sie durch Öffnungen 5 am Montageelement 3 bzw. der Brücke 3 des Hängegepäckstücks 2 durchgreifen. Auch hier ist eine Positionierhilfe durch die Positionierelemente bzw. -Gegenelemente des Hängegepäckstücks relativ zum Basisträger und/oder Zwischenträger erzielbar.

Eine solche Erleichterung einer Positionierung ist optional auch durch eine Ausbildung des Zwischenträgers und des Aufsatzträgers möglich, wie dies bereits eingangs erläutert wurde.

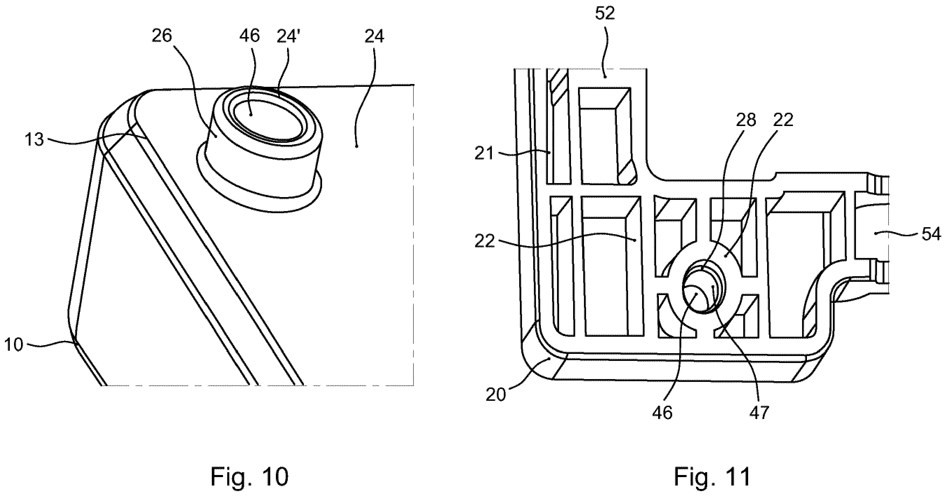

Das Positioniergegenelement kann, wie in Fig. 11 dargestellt auch in einem Rücksprung der Durchführung 46 ausgebildet sein. Es weist optional einen Sockelbereich 47 auf, der als Lagerfläche für das Positionierelement insbesondere für vertikale Lasten ausgebildet sein kann.

Im Basisträger kann ebenfalls eine Durchführung 46 ausgebildet sein (siehe Fig. 10). Diese Durchführung kann auch ein Sackloch sein. In dieser Durchführung kann das Befestigungsgegenmittel ausgebildet sein, beispielsweise ein Gewinde, eine Mutteraufnahme, etc.

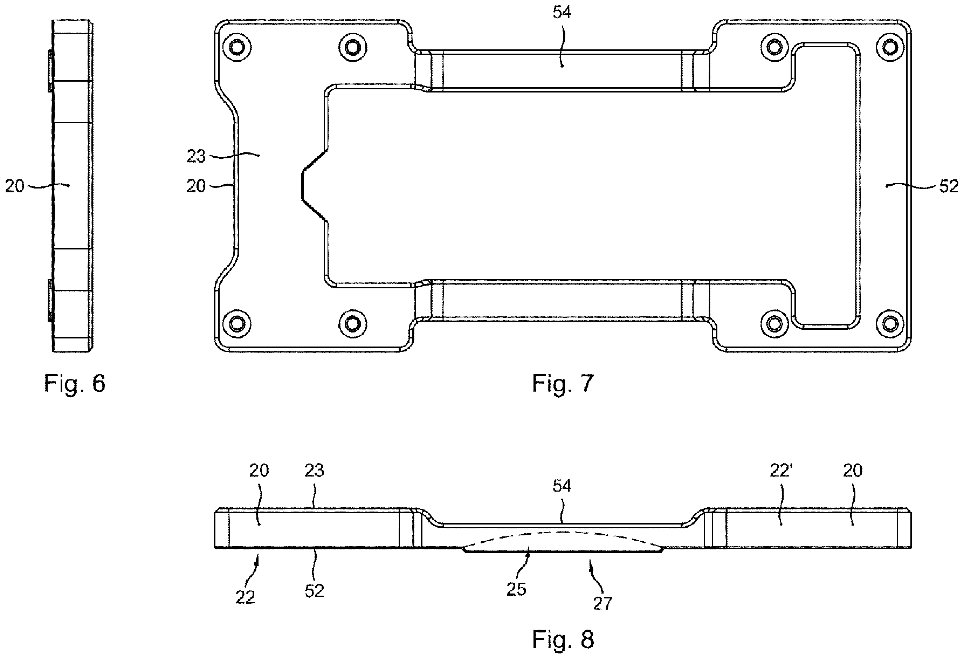

In Figur 8 ist einer weitere, unterschiedliche Ausführungsformen des Zwischenträgers in einer Seitenansicht dargestellt. Die erste Ausführungsform enthält den zuvor beschriebenen Vorsprung 27, während die andere Ausführungsform den hier gestrichelt dargestellten fixierfreien Bereich 25 darstellt, der hier durch einen Rücksprung in einem Teilbereich des Längsträgers und/oder des Querträgers gekennzeichnet ist.

In allen hier enthaltenen Figuren ist dargestellt, dass optional der Basisträger 10 und/oder der Zwischenträger 20 und/oder der Aufsatzträger 30 eine Plattengeometrie mit einer Haupterstreckungsebene E_{B}, E_{Z}, E_{A} aufweisen, wobei, wie hier festgestellt, wenigstens zwei der Haupterstreckungsebenen im festgelegten bzw. festgeklemmten Zustand coplanar zueinander ausgerichtet sind. Die Ebenen sind exemplarisch in Figuren 1 und 2 dargestellt.

Insbesondere in Verbindung mit dieser Ebenenanordnung ist optional der Basisträger 10 auf dem Zwischenträger 20 und/oder der Zwischenträger 20 auf dem Aufsatzträger 30 stapelbar ausgebildet und die Träger optional im festgeklemmten bzw. festgelegten Zustand als Sandwich-Anordnung ausgeführt.

Wie insbesondere in den Figuren 5 bis 9 und 12 dargestellt, weist optional der Zwischenträger 20 eine Rahmengeometrie aus einer Mehrzahl an Rahmenträgern 50 auf. Diese Rahmenträger 50 sind optional im Wesentlichen biegesteif miteinander verbunden. Wenigstens ein Teil der Rahmenträger 50 ist dabei optional als Querträger 52 und Längsträger 54 ausgebildet. Optional ist dabei wenigstens ein Teil der Querträger im Querschnitt dicker ausgebildet als wenigstens ein Teil der Längsträger.

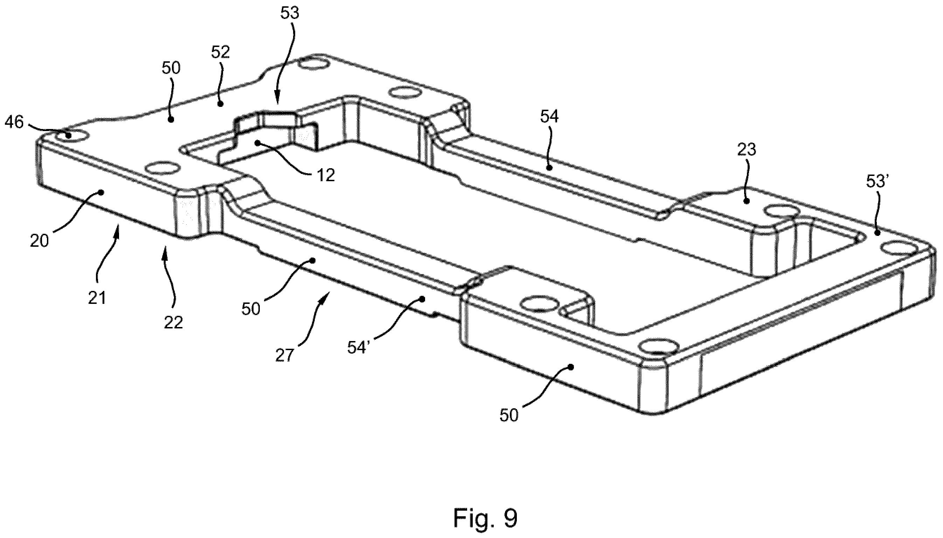

Wie insbesondere in Figur 9 dargestellt, ist es möglich, dass wenigstens ein Längsträger 54 in Bezug auf eine Oberseite 53 des Querträgers 52, optional in Bezug auf eine durch Oberseiten 53 von wenigstens zwei Querträgern 52 gebildete Oberseitenebene, zurückgesetzt angeordnet ist.

Während bei dieser Ausführungsform, wie beispielsweise in den Figuren 8 und 9 dargestellt, die Längsträger in Bezug auf eine Unterseite der Querträger, optional in Bezug auf eine durch Unterseiten von wenigstens zwei Querträgern 52 gebildete Unterseitenebene, wenigstens in einem Teilbereich, gekennzeichnet durch das Bezugszeichen 27 vorspringend ausgebildet sind, ist es auch möglich, den Längsträger in Bezug auf die Unterseiten bzw. die Unterseitenebene zurückgesetzt anzuordnen.

Optional sind die Rahmenträger des Zwischenträgers 20 derart miteinander verbunden, dass sie eine mittlere Zugangsdurchführung 56 einschließen, wie dies u. a. in Figur 12 dargestellt ist. Erkennbar sind hier die zwischen Basisträger und Zwischenträger 20 eingeklemmten Montageelemente 3 bzw. Brücken 3 der Taschen 2a und 2b und den von den Rahmenträgern 50 gebildeten Zwischenträger 20 mit seinem Zugangsbereich 56. Über diesen Zugangsbereich ist bei dieser Ausführungsform beispielsweise Zugang zu einem Haltegriff 58 möglich, der das einfache Anheben der Kombination aus Hängegepäckstück, Basisträger und Zwischenträger erlaubt.

Wie nahezu in allen Figuren dargestellt, sind optional der Zwischenträger 20 und der Basisträger derart komplementär zueinander ausgebildet, dass sie im festgelegten Zustand, siehe beispielsweise die Figuren 2, 4 und 12, und insbesondere im festgelegten Zustand des Hängegepäckstücks 2 (siehe hierzu die Figuren 2 und 12) wenigstens das Montageelement 3 des Hängegepäckstücks 2 festlegen und optional einklemmen.

Dazu weisen optional der Zwischenträger 20 wenigstens ein Fixierelement 22, das hier optional als Presselement 22 und im Besonderem als Pressfläche ausgebildet ist, und der Basisträger 10 wenigstens ein korrespondierendes Fixiergegenelement 24 bzw. Pressgegenelement 24 auf, die derart ausgebildet sind, dass sie im festgelegten Zustand des Hängegepäckstücks 2, siehe beispielsweise Figuren 2 und 12, oder wenigstens ein Montageelement 3 des Hängegepäckstücks 2 einklemmen.

Bei dieser Ausführungsform sind Fixierelement 22 und Fixiergegenelement 24 optional an sich gegenüberliegenden Seiten des Zwischenträgers 20 und des Basisträgers 10 angeordnet. Optional sind sie, wie insbesondere in Figur 3 dargestellt, an einer Unterseite 21 des Zwischenträgers 20 und einer Oberseite 13 des Basisträgers 10 ausgebildet.

Fixierelement 22 und Fixiergegenelement 24 können auf unterschiedliche Art und Weise ausgebildet sein. Es ist denkbar, das Fixierelement als Presselement 22 auszuführen und das Fixiergegenelement als Pressgegenelement. Auch ist denkbar, das Fixierelement und das Fixiergegenelement als komplementäre Bauteile derart auszuführen, dass sie ineinandergreifend eine Vertikalfixierung eines dazwischen angeordneten Montageelements und/oder eine Horizontalfixierung erlauben. Optional ist es denkbar, dass das Fixierelement als ein Vorsprung und/oder als eine Vertiefung aus der Erstreckungsebene des Zwischenträgers hervorragt bzw. in dieser ausgebildet ist. Auch ist es denkbar, dass das Fixiergegenelement als ein dazu komplementärer Vorsprung und/oder als eine dazu komplementäre Vertiefung aus der Erstreckungsebene des Basisträgers hervorragt bzw. in dieser ausgebildet ist. Fixierelement und Fixiergegenelement bilden optional einen Klemmbereich für das Hängegepäckstück.

Wie in den Figuren 5 bis 9 dargestellt, ist bei der hier dargestellten Ausführungsform optional das Fixierelement 22 als ein Presselement ausgebildet, dass das Montageelement des Hängegepäckstücks gegen ein Pressgegenelement 24 am Basisträger 10 festklemmt. Zudem kann eine Fixierung über die Koppelung zwischen Befestigungsmittel 40 und Befestigungsgegenmittel erfolgen.

Bei dieser Ausführungsform optional, bildet eine Durchführung 46 im Zwischenträger 20 einen Teil des jeweiligen Befestigungsmittels 40, über das der Zwischenträger 20 am Basisträger 10 befestigbar ist. Über diese Durchführung kann z. B. ein als Schraube oder dergleichen Bolzen durchgeführtes Befestigungsmittel durchgeführt werden.

Wie insbesondere in Figur 9 dargestellt, sind eine Mehrzahl an Fixierelementen und/oder Fixiergegenelementen vorgesehen, von denen wenigstens zwei 22, 24 unter Bildung eines fixierfreien Bereichs 25 voneinander beabstandet sind. Optional ist dabei der Relativabstand zwischen der Unterseite 21 des Zwischenträgers 20 und der Oberseite des Basisträgers 10 im Bereich zwischen dem Presselement und dem Pressgegenelement geringer als der Abstand zwischen der Unterseite 21 des Zwischenträgers 20 und der Oberseite des Basisträgers 10 im fixierfreien Bereich.

### Bezugszeichen

- 1: Gepäckträgersystem
- 2a, 2b: Taschen
- 2: Hängegepäckstück
- 3: Montageelement bzw. Brücke
- 4: Aufsatzgepäckstück
- 6: Gepäckträger
- 10: Basisträger
- 11: Unterseite
- 12: Basisklemmmittel
- 13: Oberseite
- 14: Basisklemmmittelaufnahme
- 20: Zwischenträger
- 21: Unterseite
- 22: Fixierelement bzw. Presselement
- 23: Oberseite
- 24: Fixiergegenelement bzw. Pressgegenelement
- 25: Fixierfreier Bereich bzw. pressfreier Bereich
- 26: Positionierelement
- 27: Vorsprung
- 28: Positioniergegenelement
- 30: Aufsatzträger
- 32: Aufsatzklemmmittel
- 34: Aufsatzklemmmittelaufnahme

- 40: Befestigungsmittel

- 44: Sicherungsmittel
- 46: Durchführung
- 50: Rahmenträger

- 52: Querträger
- 53: Oberseite
- 54: Längsträger
- 55: Unterseite
- 56: Zugangsdurchführung

- 58: Haltegriff
- 61: Oberseite
- E_{B}, E_{Z}, E_{A}: Haupterstreckungsebene
- Ps: Sollposition
- Ax: Längsstreckungsachse des Gepäckträgers bzw. Haupterstreckungsachse eines Fahrrads

## Patentansprüche

1. Gepäckträgersystem, zur Montage von zwei Gepäckstücken, nämlich einem Hängegepäckstück (2) und einem Aufsatzgepäckstück (4), an einem Gepäckträger (6) eines Fahrrades, umfassend:
• eine Basis-Klemmmittelaufnahme (14), die am Gepäckträger (6) festlegbar, optional verschraubbar oder dergleichen festlegbar, oder ausgebildet ist;
• einen Basisträger (10), mit einem Basis-Klemmmittel (12), über das der Basisträger (10) an der Basis-Klemmmittelaufnahme (14) am Gepäckträger (6) lösbar fixierbar, optional festklemmbar ist;
• einen Zwischenträger (20), über den das Hängegepäckstück (2) am Basisträger (10) festlegbar, optional verschraubbar oder dergleichen festlegbar ist, und der wenigstens eine Aufsatz-Klemmmittelaufnahme (34) aufweist; und
• einen Aufsatzträger (30), der am Aufsatzgepäckstück (4) festlegbar, optional verschraubbar oder dergleichen festlegbar ist, und der ein Aufsatz-Klemmmittel (32) aufweist, über das der Aufsatzträger (30) lösbar an der Aufsatz-Klemmmittelaufnahme (34) fixierbar, optional festklemmbar ist,
**dadurch gekennzeichnet, dass**
das Aufsatz-Klemmmittel (32) derart ausgebildet ist, dass es sowohl an der Aufsatz-Klemmmittelaufnahme (34) am Zwischenträger (20) als auch an der Basis-Klemmmittelaufnahme (14) am Gepäckträger (6) lösbar festklemmbar ist.

2. Gepäckträgersystem nach Anspruch 1, **dadurch gekennzeichnet, dass**
das Aufsatz-Klemmmittel (32) im Wesentlichen identisch zum Basis-Klemmmittel (12) ausgebildet ist, und/oder, dass die Aufsatz-Klemmmittelaufnahme (34) im Wesentlichen identisch zur Basis-Klemmmittelaufnahme (14) ausgebildet ist.

3. Gepäckträgersystem nach einem der vorhergehenden Ansprüche, **dadurch gekennzeichnet, dass**
der Basisträger (10) und/oder der Aufsatzträger (30) ein Sicherungsmittel (44) aufweisen, über das der Basisträger (10) diebstahlgeschützt lösbar am Gepäckträger (6) bzw. der Aufsatzträger (30) diebstahlgeschützt am Zwischenträger (20) festlegbar sind, und optional nur unter Verwendung eines Schlüssels lösbar sind.

4. Gepäckträgersystem nach einem der vorhergehenden Ansprüche, **dadurch gekennzeichnet, dass**
der Zwischenträger (20) und der Basisträger (10) derart komplementär zueinander ausgebildet sind, dass sie im festgelegten Zustand des Hängegepäckstücks (2) wenigstens ein Montageelement (3) des Hängegepäckstücks (2), optional eine Brücke (3) einer Satteltasche (2), die zwei Taschen (2a, 2b) der Satteltasche (2) verbindet, festlegen, optional einklemmen.

5. Gepäckträgersystem nach einem der vorhergehenden Ansprüche, **dadurch gekennzeichnet, dass**
der Zwischenträger (20) wenigstens ein Fixierelement, optional ein Presselement (22),
und der Basisträger (10) wenigstens ein korrespondierendes Fixiergegenelement, optional ein Pressgegenelement (24), aufweist, die derart komplementär zueinander ausgebildet sind, dass sie im festgelegten Zustand des Hängegepäckstücks (2), wenigstens ein Montageelement (3) des Hängegepäckstücks (2), optional eine Brücke (3) einer Satteltasche (2), die optional zwei Taschen (2a, 2b) der Satteltasche (2) verbindet, festlegen, optional einklemmen.

6. Gepäckträgersystem nach Anspruch 5,
**dadurch gekennzeichnet, dass**
das Fixierelement und das Fixiergegenelement, optional das Presselement (22) und das Pressgegenelement (24), an sich gegenüberliegenden Seiten des Zwischenträgers (20) und des Basisträgers (10), optional an einer Unterseite (21) des Zwischenträgers (20) und an einer Oberseite (13) des Basisträgers (10) ausgebildet sind.

7. Gepäckträgersystem nach einem der Ansprüche 5 oder 6,
**dadurch gekennzeichnet, dass**
das Fixierelement, optional das Presselement (22), als ein Vorsprung oder als eine Vertiefung aus der Erstreckungsebene des Zwischenträgers hervorragt bzw. in dieser ausgebildet ist, und das Fixiergegenelement, optional das Pressgegenelement (24) als ein dazu komplementärer Vorsprung oder als eine dazu komplementäre Vertiefung aus der Erstreckungsebene des Basisträgers (10) hervorragt bzw. in dieser ausgebildet ist, derart, dass ein Fixierbereich, optional ein Klemmbereich für das Hängegepäckstück gebildet wird.

8. Gepäckträgersystem nach einem der Ansprüche 5 - 7,
**dadurch gekennzeichnet, dass**
eine Mehrzahl an solchen Fixierelementen, optional Presselementen (22), und/oder solchen Fixiergegenelementen, optional Pressgegenelementen (24), vorgesehen sind, von denen wenigstens zwei (22, 24) unter Bildung eines fixierfreien Bereichs (25), optional eines klemmfreien Bereichs (25) voneinander beabstandet sind.

9. Gepäckträgersystem nach Anspruch 8, wenn abhängig von Anspruch 6,
**dadurch gekennzeichnet, dass**
ein Relativabstand zwischen der Unterseite (21) des Zwischenträgers (20) und der Oberseite des Basisträgers (10) im Bereich zwischen dem Presselement (22) und dem Pressgegenelement (24) geringer ist als der Abstand zwischen der Unterseite (21) des Zwischenträgers (20) und der Oberseite des Basisträgers (10) im fixierfreien Bereich (25), optional dem klemmfreien Bereich (25).

10. Gepäckträgersystem nach einem der vorhergehenden Ansprüche, **dadurch gekennzeichnet, dass**
der Zwischenträger (20) eine Rahmengeometrie aus einer Mehrzahl an Rahmenträgern (50) aufweist, die im Wesentlichen biegesteif miteinander verbunden sind, optional wobei wenigstens ein Teil der Rahmenträger (50) als Querträger (52) und Längsträger (54) ausgebildet sind.

11. Gepäckträgersystem nach Anspruch 10,
**dadurch gekennzeichnet, dass**
wenigstens ein Teil der Querträger (52) im Querschnitt dicker ausgebildet ist als wenigstens ein Teil der Längsträger (54).

12. Gepäckträgersystem nach einem der Ansprüche 10 oder 11, **dadurch gekennzeichnet, dass**
wenigstens einer der Längsträger (54) in Bezug auf eine Oberseite (53) wenigstens eines der Querträger (52), optional in Bezug auf eine durch Oberseiten von wenigstens zwei der Querträger gebildete Oberseitenebene, und/oder in Bezug auf eine Unterseite wenigstens eines der Querträger, optional in Bezug auf eine durch Unterseiten von wenigstens zwei der Querträger gebildete Unterseitenebene, zurückgesetzt angeordnet ist.

13. Gepäckträgersystem nach einem der Ansprüche 10 - 12,
**dadurch gekennzeichnet, dass**
die Rahmenträger (50) des Zwischenträgers derart miteinander verbunden sind, das sie eine mittlere Zugangsdurchführung (56) einschließen.

14. Gepäckträgersystem nach einem der vorhergehenden Ansprüche, **dadurch gekennzeichnet, dass**
der Basisträger (10) wenigstens ein Positionierelement (26) und der Zwischenträger (20) wenigstens ein Positioniergegenelement (28) aufweisen, die in einer relativ zueinander ausgerichteten Sollposition (PS) zwischen Basisträger (10) und Zwischenträger (20) miteinander in Kopplungseingriff stehen, und/oder, dass
der Zwischenträger (20) ein Positionierelement (26) und der Aufsatzträger (30) ein Positioniergegenelement (28) aufweisen, die in einer relativ zueinander ausgerichteten Sollposition (PS) zwischen Zwischenträger (20) und Aufsatzträger (30) miteinander in Kopplungseingriff stehen.

15. Gepäckträgeranordnung, umfassend ein Gepäckträgersystem nach einem der vorhergehenden Ansprüche und einen Gepäckträger (6), optional weiter umfassend zwei Gepäckstücke, nämlich ein Hängegepäckstück (2) und ein Aufsatzgepäckstück (4).

## Claims

1. A luggage carrier system for mounting two luggage items, namely a suspended luggage item (2) and an attachment luggage item (4), on a luggage carrier (6) of a bicycle, comprising:
• a base clamping means receptacle (14) which can be fixed onto the luggage carrier (6), optionally screwed or fixed in a similar manner, or is formed thereon;
• a base carrier (10), with a base clamping means (12), via which the base carrier (10) can be detachably fixed, optionally clamped, to the base clamping means receptacle (14) on the luggage carrier (6);
• an intermediate carrier (20), via which the suspended luggage item (2) can be fixed, optionally screwed or can be fixed in a similar manner, to the base carrier (10), and which has at least one attachment clamping means receptacle (34); and
• an attachment carrier (30) which can be fixed, optionally screwed or fixed in a similar manner, to the attachment luggage item (4) and which has an attachment clamping means (32) by means of which the attachment carrier (30) can be detachably fixed, optionally clamped, to the attachment clamping means receptacle (34),
**characterised in that**
the attachment clamping means (32) is designed in such a way that it can be detachably clamped both to the attachment clamping means receptacle (34) on the intermediate carrier (20) and to the base clamping means receptacle (14) on the luggage carrier (6).

2. The luggage carrier system according to claim 1,
**characterised in that**
the attachment clamping means (32) is substantially identical to the base clamping means (12), and/or **in that** the attachment clamping means receptacle (34) is substantially identical to the base clamping means receptacle (14).

3. The luggage carrier system according to any of the preceding claims, **characterised in that**
the base carrier (10) and/or the attachment carrier (30) have a securing means (44) by means of which the base carrier (10) can be fixed detachably to the luggage carrier (6) in a theft-protected manner or the attachment carrier (30) can be fixed to the intermediate carrier (20) in a theft-protected manner, and optionally can only be detached using a key.

4. The luggage carrier system according to any of the preceding claims, **characterised in that**
the intermediate carrier (20) and the base carrier (10) are formed complementary to each other in such a way that, in the fixed state of the suspended luggage item (2), they fix, optionally clamp, at least one mounting element (3) of the suspended luggage item (2), optionally a bridge (3) of a saddle bag (2) connecting two pockets (2a, 2b) of the saddle bag (2).

5. The luggage carrier system according to any of the preceding claims, **characterised in that**
the intermediate carrier (20) has at least one fixing element, optionally a pressing element (22), and the base carrier (10) has at least one corresponding fixing counter-element, optionally a pressing counter-element (24), which are designed to be complementary to one another in such a way that, in the fixed state of the suspended luggage item (2), they fix, optionally clamp, at least one mounting element (3) of the suspended luggage item (2), optionally a bridge (3) of a saddle bag (2), optionally connecting two pockets (2a, 2b) of the saddle bag (2).

6. The luggage carrier system according to claim 5,
**characterised in that**
the fixing element and the fixing counter-element, optionally the pressing element (22) and the pressing counter-element (24), are formed on opposite sides of the intermediate carrier (20) and of the base carrier (10), optionally on a lower side (21) of the intermediate carrier (20) and on an upper side (13) of the base carrier (10).

7. The luggage carrier system according to any of claims 5 or 6, **characterised in that**
the fixing element, optionally the pressing element (22), protrudes as a projection from the extension plane of the intermediate carrier or is formed as a depression therein, and the fixing counter-element, optionally the pressing counter-element (24), protrudes from the extension plane of the base carrier (10) as a projection complementary thereto or is formed therein as a depression complementary thereto, in such a way that a fixing region, optionally a clamping region, is formed for the suspended luggage item.

8. The luggage carrier system according to any of claims 5 - 7, **characterised in that**
a plurality of such fixing elements, optionally pressing elements (22), and/or such fixing counter-elements, optionally pressing counter-elements (24), are provided, of which at least two (22, 24) are spaced apart from one another to form a fixing-free region (25), optionally a clamping-free region (25).

9. The luggage carrier system according to claim 8, when dependent on claim 6,
**characterised in that**
a relative distance between the lower side (21) of the intermediate carrier (20) and the upper side of the base carrier (10) in the region between the pressing element (22) and the pressing counter-element (24) is smaller than the distance between the lower side (21) of the intermediate carrier (20) and the upper side of the base carrier (10) in the fixing-free region (25), optionally the clamping-free region (25).

10. The luggage carrier system according to any of the preceding claims, **characterised in that**
the intermediate carrier (20) has a frame geometry from a plurality of frame carriers (50) which are connected to one another in a substantially bend-resistant manner, optionally wherein at least some of the frame members (50) are formed as cross members (52) and longitudinal members (54).

11. The luggage carrier system according to claim 10,
**characterised in that**
at least one part of the cross members (52) is thicker in cross-section than at least one part of the longitudinal members (54).

12. The luggage carrier system according to any of claims 10 or11, **characterised in that**
at least one of the longitudinal members (54) is set back with respect to an upper side (53) of at least one of the cross members (52), optionally with respect to an upper side plane formed by upper sides of at least two of the cross members, and/or with respect to a lower side of at least one of the cross members, optionally with respect to a lower side plane formed by lower sides of at least two of the cross members.

13. The luggage carrier system according to any of claims 10 - 12, **characterised in that**
the frame members (50) of the intermediate carrier are connected to each other in such a way that they enclose a central access passage (56).

14. The luggage carrier system according to any of the preceding claims, **characterised in that**
the base carrier (10) has at least one positioning element (26) and the intermediate carrier (20) has at least one positioning counter-element (28), which are in coupling engagement with one another between the base carrier (10) and the intermediate carrier (20) in a set position (PS) aligned relative to one another, and/or **in that**
the intermediate carrier (20) has a positioning element (26) and the attachment carrier (30) has a positioning counter-element (28), which are in coupling engagement with one another between the intermediate carrier (20) and the attachment carrier (30) in a set position (PS) aligned relative to one another,.

15. A luggage carrier arrangement comprising a luggage carrier system according to any of the preceding claims and a luggage carrier (6), optionally further comprising two luggage items, namely a suspended luggage item (2) and an attachment luggage item (4).

## Revendications

1. Système de porte-bagages, pour le montage de deux bagages, à savoir un bagage suspendu (2) et un bagage posé (4), sur un porte-bagages (6) d'une bicyclette, comprenant :
• un logement de moyen de serrage de base (14) qui peut être immobilisé, éventuellement vissé ou immobilisé de manière similaire, ou réalisé sur le porte-bagages (6) :
• un support de base (10), avec un moyen de serrage de base (12), par l'intermédiaire duquel le support de base (10) peut être fixé de manière amovible sur le logement de moyen de serrage de base (14) sur le porte-bagages (6), éventuellement bloqué ;
• un support intermédiaire (20), par l'intermédiaire duquel le bagage suspendu (2) peut être immobilisé sur le support de base (10), éventuellement vissé ou immobilisé de manière similaire, et qui présente au moins un logement de moyen de serrage posé (34) ; et
• un support posé (30) qui peut être immobilisé, éventuellement vissé ou immobilisé de manière similaire, sur le bagage à poser (4), et qui présente un moyen de serrage posé (32) par l'intermédiaire duquel le support posé (30) peut être fixé, éventuellement bloqué, de manière amovible sur le logement de moyen de serrage posé (34),
**caractérisé en ce que**
le moyen de serrage posé (32) est réalisé de telle sorte qu'il peut être bloqué de manière amovible aussi bien sur le logement de moyen de serrage posé (34) sur le support intermédiaire (20) que sur le logement de moyen de serrage de base (14) sur le porte-bagages (6).

2. Système de porte-bagages selon la revendication 1, **caractérisé en ce que** le moyen de serrage posé (32) est réalisé essentiellement de manière identique au moyen de serrage de base (12), et/ou **en ce que** le logement de moyen de serrage posé (34) est réalisé essentiellement de manière identique au logement de moyen de serrage de base (14).

3. Système de porte-bagages selon l'une quelconque des revendications précédentes, **caractérisé en ce que** le support de base (10) et/ou le support posé (30) présentent un moyen de sécurité (44) par l'intermédiaire duquel le support de base (10) peut être immobilisé de manière amovible de manière protégée contre le vol sur le porte-bagages (6) ou le support posé (30) peut être immobilisé de manière protégée contre le vol sur le support intermédiaire (20), et éventuellement ne peut être détaché qu'en utilisant une clé.

4. Système de porte-bagages selon l'une quelconque des revendications précédentes, **caractérisé en ce que** le support intermédiaire (20) et le support de base (10) sont complémentaires l'un de l'autre de telle sorte qu'à l'état immobilisé du bagage suspendu (2), ils immobilisent, éventuellement coincent, au moins un élément de montage (3) du bagage suspendu (2), éventuellement un pont (3) d'une sacoche (2), qui relie deux poches (2a, 2b) de la sacoche (2).

5. Système de porte-bagages selon l'une quelconque des revendications précédentes, **caractérisé en ce que** le support intermédiaire (20) présente au moins un élément de fixation, éventuellement un élément de pressage (22), et le support de base (10) au moins un contre-élément de fixation correspondant, éventuellement un contre-élément de pressage (24), qui sont complémentaires de telle sorte qu'à l'état immobilisé du bagage suspendu (2), ils immobilisent, éventuellement coincent, au moins un élément de montage (3) du bagage suspendu (2), éventuellement un pont (3) d'une sacoche (2), qui relie deux poches (2a, 2b) de la sacoche (2).

6. Système de porte-bagages selon la revendication 5, **caractérisé en ce que** l'élément de fixation et le contre-élément de fixation, éventuellement l'élément de pressage (22) et le contre-élément de pressage (24), sont réalisés sur des côtés opposés du support intermédiaire (20) et du support de base (10), éventuellement sur une face inférieure (21) du support intermédiaire (20) et sur une face supérieure (13) du support de base (10).

7. Système de porte-bagages selon l'une quelconque des revendications 5 ou 6, **caractérisé en ce que** l'élément de fixation, éventuellement l'élément de pressage (22), fait saillie du plan d'extension du support intermédiaire sous la forme d'une saillie ou d'un évidement ou est réalisé dans celui-ci, et le contre-élément de fixation, éventuellement le contre-élément de pressage (24), fait saillie du plan d'extension du support de base (10) sous forme d'une saillie ou d'un évidement complémentaire de celle-ci ou est réalisé dans celui-ci, de telle sorte qu'une zone de fixation, en option une zone de serrage pour le bagage suspendu, est formée.

8. Système de porte-bagages selon l'une quelconque des revendications 5 à 7, **caractérisé en ce qu'**une pluralité de tels éléments de fixation, éventuellement des éléments de pressage (22), et/ou de tels contre-éléments de fixation, éventuellement des contre-éléments de pressage (24) sont prévus, dont au moins deux (22, 24) sont espacés l'un de l'autre en formant une zone sans fixation (25), éventuellement une zone sans serrage (25).

9. Système de porte-bagages selon la revendication 8, si dépendant de la revendication 6, **caractérisé en ce qu'**une distance relative entre la face inférieure (21) du support intermédiaire (20) et la face supérieure du support de base (10) dans la zone entre l'élément de pressage (22) et le contre-élément de pressage (24) est inférieure à la distance entre la face inférieure (21) du support intermédiaire (20) et la face supérieure du support de base (10) dans la zone sans fixation (25), éventuellement la zone sans serrage (25).

10. Système de porte-bagages selon l'une quelconque des revendications précédentes, **caractérisé en ce que** le support intermédiaire (20) présente une géométrie de cadre constituée d'une pluralité de supports de cadre (50) qui sont reliés entre eux de manière essentiellement rigide à la flexion, éventuellement dans lequel au moins une partie des supports de cadre (50) sont réalisés sous forme de traverses (52) et de longerons (54).

11. Système de porte-bagages selon la revendication 10, **caractérisé en ce qu'**au moins une partie des traverses (52) est plus épaisse en section transversale qu'au moins une partie des longerons (54).

12. Système de porte-bagages selon l'une quelconque des revendications 10 ou 11, **caractérisé en ce qu'**au moins l'un des longerons (54) est disposé en retrait par rapport à une face supérieure (53) d'au moins l'une des traverses (52), éventuellement par rapport à un plan de face supérieure formé par les faces supérieures d'au moins deux des traverses et/ou par rapport à une face inférieure d'au moins l'une des traverses, éventuellement par rapport à un plan de face inférieure formé par les faces inférieures d'au moins deux des traverses.

13. Système de porte-bagages selon l'une quelconque des revendications 10 à 12, **caractérisé en ce que** les supports de cadre (50) du support intermédiaire sont reliés entre eux de manière à inclure un passage d'accès central (56).

14. Système de porte-bagages selon l'une quelconque des revendications précédentes, **caractérisé en ce que** le support de base (10) présente au moins un élément de positionnement (26) et le support intermédiaire (20) au moins un contre-élément de positionnement (28) qui, dans une position de consigne (PS) orientée l'un par rapport à l'autre entre le support de base (10) et le support intermédiaire (20) sont en prise d'accouplement l'un avec l'autre et/ou que le support intermédiaire (20) présente un élément de positionnement (26) et le support posé (30) présente un contre-élément de positionnement (28), qui dans une position de consigne orientée l'un par rapport à l'autre entre le support intermédiaire (20) et le support posé (30) sont en prise d'accouplement l'un avec l'autre.

15. Agencement de porte-bagages, comprenant un système de porte-bagages selon l'une quelconque des revendications précédentes et un porte-bagages (6), comprenant en outre éventuellement deux bagages, à savoir un bagage suspendu (2) et un bagage posé (4).
